Europäisches Patentamt

European Patent Office

Office européen des brevets

(11) Publication number: **0 454 932 A2**

# EUROPEAN PATENT APPLICATION

(21) Application number: 90630246.8

(51) Int. Cl.5: **B29D 30/38**

(22) Date of filing: **18.12.90**

(30) Priority: **30.04.90 US 516592**

(43) Date of publication of application:
**06.11.91 Bulletin 91/45**

(84) Designated Contracting States:
**DE FR GB IT LU**

(71) Applicant: **THE GOODYEAR TIRE & RUBBER COMPANY**
**1144 East Market Street**
**Akron, Ohio 44316-0001(US)**

(72) Inventor: **Magnus, Fredrick Lewis**
**1601 Buckeye Street**
**Mogadore, Ohio 44260(US)**
Inventor: **Oare, Thomas Reed**
**1901 Swartz Road**
**Suffield, Ohio 44260(US)**
Inventor: **Rye, Grover Wilford**
**630 S. Hidden Valley Rd.**
**Cuyahoga Falls, Ohio 44223(US)**

(74) Representative: **Leitz, Paul**
**Goodyear Technical Center, Patent Department**
**L-7750 Colmar-Berg(LU)**

(54) **A method of processing, storing and utilizing sheets of elastomeric coated cords.**

(57) A method of producing sheets (48) of elastomeric coated cords (40) for use in the building of laminated rubber articles such as tires is disclosed. The process eliminates the use of polyethylene liners in the manufacture and storage of the sheets. Composite elastomeric sheets are produced having cords (40) on one side and an unvulcanized elastomer (44) on the other side. The tack of the unvulcanized elastomer is reduced after calendering such that the sheet can be rolled up upon itself, without the use of a liner, and unrolled such that it will self-release. The above method is especially adapted for the manufacture of strips of sheets for use as overlays in tires.

FIG. 2B

This invention relates generally to a method of producing, storing and using elastomeric coated cords or rubber coated cords forming a rubber coated sheet. This invention relates especially to rubber coated sheets for use in the manufacture of tires or tire related components. More specifically this invention relates to the manufacturing and use of overlays for tires.

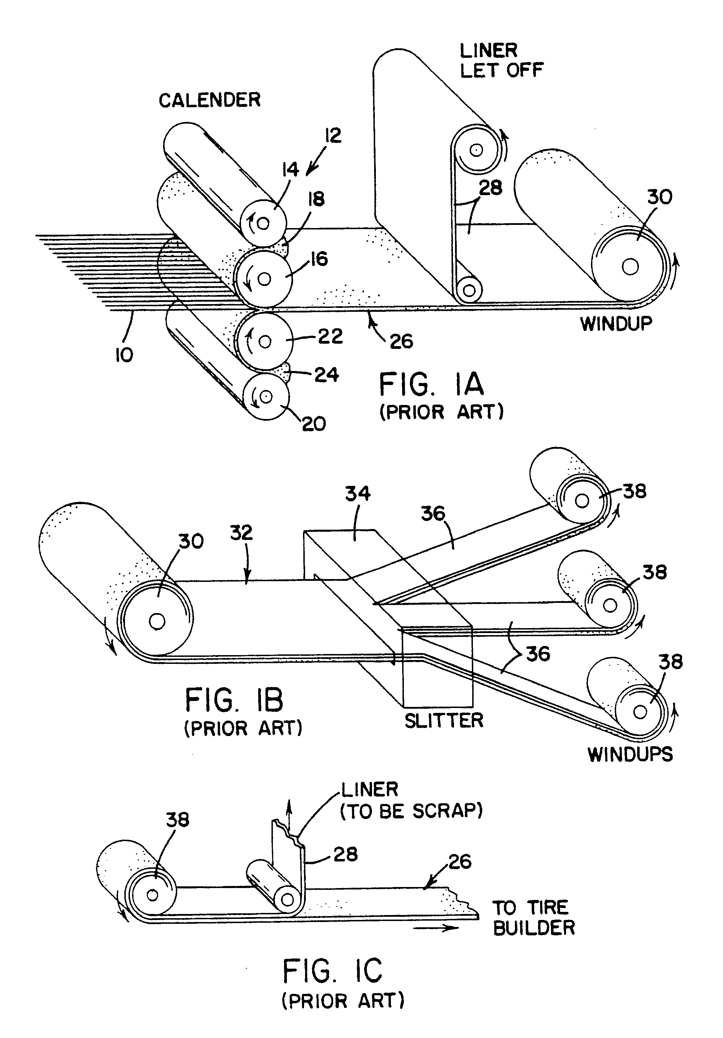

With reference to Figure 1A it has been known to produce rubber coated cords by passing a plurality of cords 10 through a calender 12 which coats one or more sides of the cords with rubber to produce a composite sheet of rubber coated cords. For example a typical four roll calender 12 includes a top pair of coating calender rolls 14 and 16 supporting a bank 18 of rubber for applying a top layer of rubber to the cords. A corresponding pair of bottom coacting calender rolls 20 and 22 support a bank 24 of rubber for applying a bottom layer of rubber to the cords. The resulting composite sheet of rubber coated cords 26 is then wound up and stored for a length of time. Storage of the rubber coated sheet of cords poses problems in that the side or sides coated with the unvulcanized rubber 18, 24 are very tacky. It is well known that if unvulcanized rubber of one side of a sheet comes in contact with itself or unvulcanized rubber of the other side of the sheet, such as during folding or winding, it may be very difficult if not impossible to separate them without causing rubber to release from the cords.

Therefore in order to wind up the rubber coated sheet of cords prior to vulcanization a liner 28 is applied to one of the rubber coated sides. Liners which have been used have typically been a fabric, such as cloth, and plastic, such as polyethylene. As the sheet is wound up in a roll 30, the liner 28 will always be between two layers of rubber to thereby prevent them from coming into contact. Once wound-up, it can be stored until further processing is required.

For example, with reference to Fig 1B, the rubber coated sheet and liner, may be unwound from the roll 30 and passed through a cutting device 34 known as a slitter. The slitter, slits the combination 32 of the sheet and the liner into two or more smaller parts 36 which may then be wound up into rolls 38 for further use at a later time.

With reference to Fig 1C, when the smaller rolls 38 are unwound the liner 28 is stripped from the rubber sheet of coated cords 40 and incorporated into the manufacture of for example, a tire. The liner 28 however is scrapped because, having been slit it is no longer wide enough to be reused as a liner for the rubber coated sheet that is produced by the calender of Fig. 1A. Eliminating the scrapping of even a relatively inexpensive liner, can add up to be a significant cost reduction. The cost to scrap the slitted liners includes the original cost of the liner, plus the handling cost to move the slitted liners to a collection point and the disposal costs involved in hauling it away.

It therefore is desirous to provide a means of manufacturing or storing sheets of rubber or elastomeric coated cords which would eliminate the need for slitting or destroying the liner. It is also desirous to provide a rubber or elastomeric coated sheet which is tacky on one side and is less tacky on the other side so that it can be wound or rolled upon itself and later unwound to self release, such that the sheet does not stick to itself. Therefore, in accordance with one aspect of the invention there is provided a method comprising the steps of:

a) providing a plurality of cords;

b) applying an unvulcanized elastomeric compound to the plurality of cords and allowing only a sufficient amount of the elastomeric compound to strike-through between the cords such that the elastomeric compound does not debond from the cords, to produce a composite sheet having the elastomeric compound on one side and exposed cords on another side;

c) reducing the tack of the elastomeric coated side such that the elastomeric side will readily release from the non-elastomeric or cord side when the composite sheet is rolled upon itself.

Further, in accordance with another aspect of the invention there is provided a method comprising the steps of:

a) providing a plurality of cords; b) applying an elastomeric compound to coat one side of the cords to form a composite sheet having an elastomeric side and an opposed side of non-coated cords; c) applying a liner onto the elastomeric side of the sheet and winding the sheet and liner into a roll;

d) reducing the tack of the elastomeric side of the sheet; (e) unwinding the roll and stripping the liner from the sheet; f) slitting or cutting the sheet into two or more smaller sheets g) winding a smaller sheet upon itself into a roll without the use of a liner; and h) after a period of time unwinding the smaller roll without the elastomer substantially debonding from the cords.

It is further desirous to produce a rubber or elastomeric sheet having the characteristic described above and which is suitable for use as a component in the manufacturing of a laminate, such as a tire. The elimination of the polyethylene liner would result in the elimination of a possible contaminate. Polyethylene has low compatibility and adhesion with polymers normally found in the construction of tires. Therefore, if a piece becomes torn from the liner and ends up in the construction of the tire the polyethylene may help in the delamination of part of the tire.

Therefore in accordance with yet another aspect of the invention there is provided a method wherein the composite sheet produced above and cut into smaller sheets is utilized in the construction of tires. More specifically where the smaller sheets are spirally applied as an overlay. That is they are applied radially outwardly of the belt reinforcing package of a tire and radially inwardly of the tread.

BRIEF DESCRIPTION OF THE DRAWINGS

The following is a brief description of the drawings in which like parts may bear like reference numerals and in which:

Figures 1A-1C are schematic views in elevation of a prior art process of making rubber coated sheets for the use in the manufacture of overlays;

Figure 2A-2C are schematic views in elevation of a method of manufacturing according to one embodiment of the invention;

Figure 3 is a partial cross-sectional view taken along lines 3-3 of Figures 2A and 2B;

Figure 4. is a cross-sectional view taken along line 4-4 of Figure 2A;

Figure 5 is a partial cross-sectional view taken about along line 5-5 of Figure 2B;

Figure 6 is a cross-sectional view of a tire according to another aspect of the invention taken in a plane that includes the axis of rotation of the tire; and

Figure 7 is a cross-sectional view of a tire according to another aspect of the invention taken in a plane that includes the axis of rotation of the tire.

DETAILED DESCRIPTION OF THE INVENTION

The following definitions are applicable to this specification, including the claims.

"Belt reinforcing structure or package" means at least two layers or plies of parallel cords, woven or unwoven, underlying the tread, unanchored to the bead, and having both left and right cord angles in the range from 17 degrees to 27 degrees with respect to the equatorial plane of the tire.

"Radial and radially" are used to mean directions radially toward or away from the axis of rotation of the tire.

"Inner" means toward the inside of the tire and "outer" means toward its exterior.

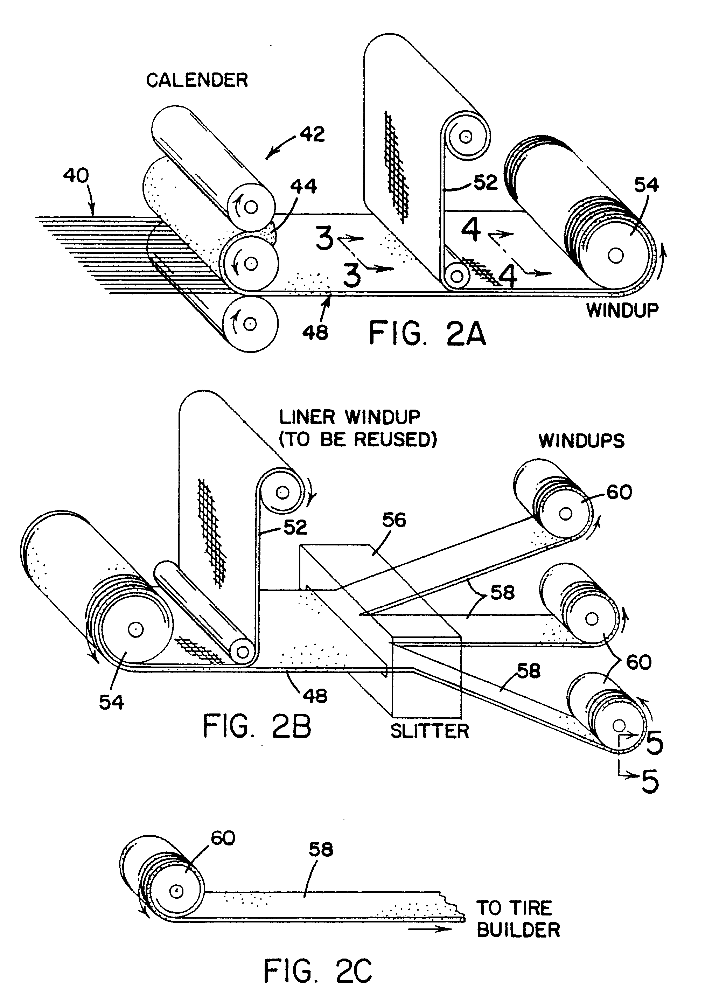

Now, with reference to Figures 2-5 there is illustrated a process for the manufacturing of a elastomeric or rubber coated sheet such as for example the manufacture of overlays or carcass plies for tires.

A plurality of cords 40 passes through a calender 42 where an elastomer 44, such as rubber, is calendered onto one side 46 of the cords 40 to produce a composite sheet 48 of elastomeric coated cords. The calendering allows the elastomer 44 to coat one side while allowing only sufficient strike through so that the elastomer will not debond from the cords. In other words the elastomer will be forced in between the cords 40 so that the elastomer will remain attached. If the cords 40 have a diameter D, the strike through ST is how much the elastomer 44 penetrates as a function of the cord diameter D. A zero (0) strike would only touch the top of the cords while a 100% strike through would be equal to the cord diameter, ie. the whole cord is enclosed. In practice it is believed that the strike through should be between 80% to 90% of the cord diameter with the most preferred being about 85%. The closer the strike through approaches 100% the greater the chance that the elastomer will inadvertently come completely through to the opposite side. Coating the cords in this manner will result in the sheet 48 having a tacky side (the coated elastomer side 46 of the cords 40) and a side (the uncoated side 50 of the cords 40) which is not as tacky as the coated side. The sheet will then be able to be wound upon itself later without a liner and will be capable of self releasing when unwound while still having sufficient tack to be used in the tire building process as explained further below. Self-releasing is the ability of the sheet to be separated from itself. In other words, when rolled up, the coated side of the sheet should readily separate from the uncoated side of the sheet when unrolled without excessive force required and/or without sufficiently large areas of elastomer being separated from the coated side to leave uncoated or bare cords exposed which will effect the integrity of the sheet.

The sheet 40 may be comprised of a number of different materials commonly used in the art of the manufacturing of tire components and belts. While good results have been achieved utilizing nylon cords, the sheet could comprise: polyester, an aromatic polyamide (for example, known under The Goodyear Tire & Rubber Co. tradename Flex-tenTM), carbon, steel, or fiberglass cords. Furthermore, while it is preferred to use parallel strands or cords it is also within the scope of the invention to use a woven fabric in which the elastomer is applied to only one side of it.

Now then, as the composite sheet 48 passes from the calender 42, a liner 52 is applied onto the coated side. The composite sheet with the liner is then wound up into a roll 54.

In that the elastomer will normally be very tacky after being calendered it is necessary to reduce the tack of the rubber before it can be wound up upon itself. In other words the tack of the coated side must be reduced or kept to a level which will readily release if brought into contact with the uncoated side. One way to accomplish this is to allow the composite sheet to age.

Aging may be accomplished by using a porous liner, such as woven fabric, as the liner 52. This is opposed to using a plastic liner such as the polyethylene which is relatively non-porous and impervious to air. Utilizing a porous liner allows for air to wick into the roll. The air then begins to age the elastomers. As the elastomer begins to age the amount of tack is reduced. The tack can therefore be reduced by allowing the roll to be exposed to air for a certain length of time, depending upon, for example, the size of the roll, the temperature, etc. Unvulcanized rubber containing sulfur, exposed to air at a given ambient temperature can, if allowed to sit for a sufficient time, age to a point that it is no longer a suitable material for use in the construction of a laminate such as a tire. It is believed that this occurs because of the migration of sulfur to the surface. This phenomena is known in the art as "blooming out." The roll therefore must sit for a sufficient time to reduce the tack so that it will release from the uncoated side but still be able to be used in the construction of tires.

With reference to Fig. 2B, after the tack has been reduced, the roll 54 is unwound, and the liner 52 is stripped from the composite sheet. The sheet then passes through a cutting device 56, such as a slitter. The slitter slits the sheet into smaller composite sheets 58 which are then wound up into rolls 60 without the use of a liner.

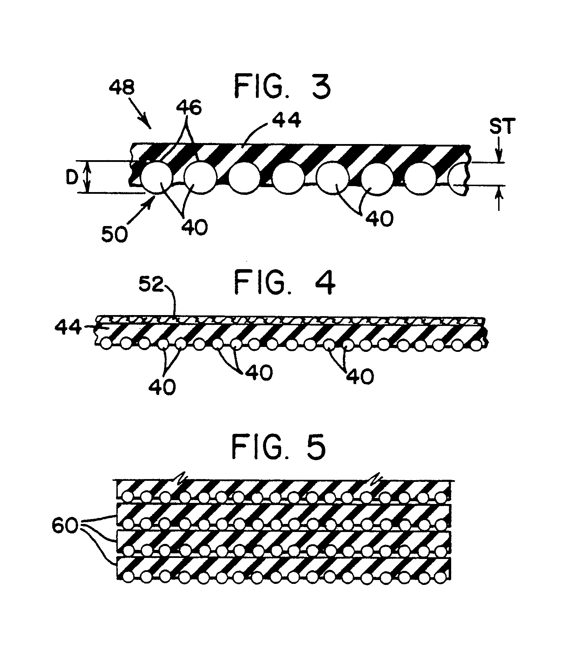

With reference to Figs. 2C and 5 the rolls then can be transported and/or stored for use at a later time. When it is time to incorporate a smaller roll 60 into another product, such as a tire, the smaller composite sheet 58 is unrolled from the roll 60 which will self-release from itself similar to if there had been a liner between the layers 62 of the roll.

The smaller composite sheets 58 may be used in the construction of tires, such as a belt overlay structure. The smaller sheets may be either applied as spiral overlays or non-spiral overlays such as for example as set forth in U. S. Patent 4,869,307 the disclosure of which is incorporated herein by reference.

Traditional overlays have equal amounts of elastomers on both sides of the fabric. It has been found that, in accordance with the invention, good results have been obtained wherein the overall thickness of the overlay remains substantially the same as prior art overlays. In other words the thickness of the elastomer according to this invention may be equal to the thickness of the elastomer of the first side plus the thickness of the elastomer of the second side of some prior art overlays.

Tires have been built wherein the overlay has had all the elastomer of the overlay structure on one side of the nylon cords. Tires were built with the uncoated side of the overlay located radially outwardly and tires were built with the uncoated side of the overlay structure located radially inwardly. It was determined that it is preferred that the uncoated side of the overlay structure be located radially inwardly with the elastomer or rubber coated side being located radially outwardly.

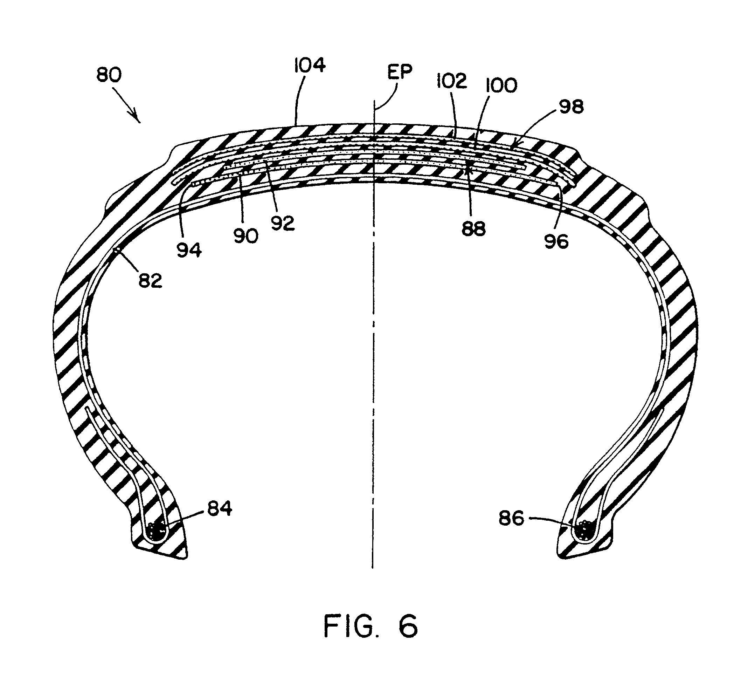

With reference to Figure 6, a pneumatic tire 80 according to the invention has a radial ply carcass comprising at least one carcass ply 82 of side by side cables which is anchored about a pair of substantially inextensible annular beads 84,86. The cables of the carcass ply are oriented at 65° to 90° with respect to the equatorial plane EP of the tire. The equatorial plane EP is a plane which is perpendicular to the axis of rotation of the tire and is disposed midway between the sidewalls of the tire. It is understood that the carcass ply or plies, may comprise fabric manufactured in accordance with the broad aspects of the present invention.

A belt reinforcing structure 88 comprising belt plies 90,92 is disposed radially outwardly of the carcass 82. An overlay structure 98 is disposed radially outwardly of the belt reinforcing structure 88, and is wrapped circumferentially thereabout. Preferably, the overlay structure 98 extends axially outwardly of the lateral edges 94, 96 of the widest belt ply 90. A tread 104 of an elastomeric compound is disposed radially outwardly of the overlay structure 98. In the embodiment illustrated in Fig. 6, prior to vulcanization the overlay structure 98 comprises a sheet of an elastomer having side by side nylon cables partially embedded in and radially inward of the elastomer and having an axial width which is greater than the distance between the lateral edges 94, 96 of the widest belt ply 90 of the belt reinforcing structure 88. In the example shown in Fig. 6, there are two wraps 100, 102 of the overlay ply around the belt structure 98. The overlay ply is usually applied to an unvulcanized tire as an annular layer, or layers, with the two end portions of the ply slightly overlapping to form a splice.

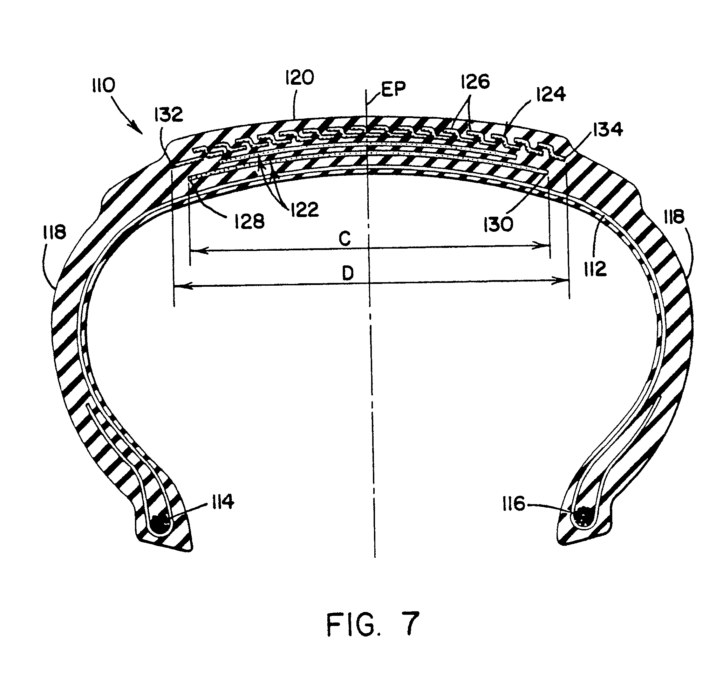

With reference to Fig. 7, a pneumatic tire 110 according to another embodiment of the invention has a radial ply carcass comprising at least one carcass ply 112 anchored about a pair of substantially inextensible annular beads 114, 116. A sidewall 118 extends radially outwardly from each bead to a crown region 120 of the tire. The crown region has a ground contacting tread 120 extending circumferentially thereabout.

A belt reinforcing structure 122 comprising one or more belt plies 128 and 130 is disposed radially outwardly of the carcass ply 112. The belt plies 128, 130 are elastomeric and are reinforced by a plurality of cords of a suitable material such as steel, glass fiber, or aromatic polyamide.

An overlay structure 124 is disposed radially outwardly of the belt reinforcing structure having an axial width D between its lateral edges 132, 134 such that it is at least as wide as the axial width C of the belt reinforcing structure 122 so as to completely cover it. The overlay structure 124 comprises a helically wound ribbon 126, of elastomeric material having the longitudinally extending cords or cables partially embedded therein. In other words the cords or cables are coated on only one side by the elastomeric material as described above. Adjacent helical convolutions of the ribbon 126 overlap one another.

Preferably the overlay structures of Figs. 6 and 7 comprise cables or cords of a heat shrinkable material such as nylon. The nylon cables are preferably arranged side by side and disposed at 0° to 5° with respect to the equatorial plane EP of the tire. The cables may comprise two yarns of nylon filaments with the yarns being twisted together with one another.

Overlays have been built wherein each yarn has a denier of 420 (466 decitex) and each cable of the overlay structure has a twist structure of 6x6. As used herein and in the claims a twist structure of "6x6" is understood to mean a structure having a yarn twist of 6 turns per inch and a cable twist of 6 turns per inch.

Overlays have also been built wherein each yarn has a denier of 840 (932 decitex) and, each cable of the overlay structure has a twist structure of 12x12. As used herein and in the claims a twist structure of "12x12" is understood to mean a structure having a yarn twist of 12 turns per inch and a cable twist of 12 turns per inch. The cables of the overlay structure have been spaced to provide 22 or 33 ends per inch.

Although the cords and cables of the overlay structure are nylon it is believed that other suitable materials may also be used, for example aromatic polyamide and glass fiber.

These descriptions and details have been shown for the purpose of illustrating this invention and it will become apparent to those skilled in the art that various changes and/or modifications may be made therein without departing from the original spirit or scope of the invention.

## Claims

1. A method of manufacturing a sheet of elastomeric coated cords comprising the steps of
   a) providing a plurality of cords;
   b) applying an unvulcanized elastomeric compound to the plurality of cords and allowing only a sufficient amount of the elastomeric compound to strike-through between the cords such that the elastomeric compound does not debond from the cords, to produce a composite sheet having the elastomeric compound on one side and exposed cords on another side; and
   c) reducing the tack of the elastomeric coated side such that the elastomeric side will readily release from the non-elastomeric or cord side when the composite sheet is rolled upon itself.

2. The method of claim 1 wherein step c further comprises:
   applying a porous liner onto the elastomeric side of the composite sheet and winding the composite into a roll; and
   allowing the composite sheet to air vulcanize.

3. The method of claim 2 further comprising the steps of unwinding the composite sheet from the roll, stripping the liner from the sheet, and winding the composite sheet into a roll or rolls without the use of a liner.

4. A method of manufacturing a sheet of elastomeric coated cords comprising the steps of
   a) providing a plurality of cords;
   b) applying an elastomeric compound to coat one side of the cords to form a composite sheet having an elastomeric side and an opposed side of non-coated cords;
   c) applying a liner onto the elastomeric side of the sheet and winding the sheet and liner into a roll;
   d) reducing the tack of the elastomeric side of the sheet;
   e) unwinding the roll and stripping the liner from the sheet;
   f) slitting or cutting the sheet into two or more smaller sheets;
   g) winding a smaller sheet upon itself into a roll without the use of a liner; and
   h) after a period of time unwinding the smaller roll without the elastomer substantially debonding from the cords.

5. The method of claim 4 wherein the tack is reduced by allowing the elastomer to age in the presence of air.

6. The method of claim 5 wherein the liner is porous.

7. The method of claim 4 wherein each of the cords comprise two yarns of nylon filaments with the yarns being twisted together with one another.

8. The method of claim 7 wherein each of the yarns has a denier of 420 and a twist structure of 6x6.

9. The method of claim 7 wherein each of the yarns has a denier of 840 and a twist structure of 12x12.

10. A method of building a tire comprising the steps of
    a) providing a plurality of cords;
    b) applying an elastomeric compound to coat one side of the cords to form a composite sheet having an elastomeric side and an opposed side of non-coated cords;
    c) applying a liner onto the elastomeric side of the sheet and winding the sheet and liner into a roll;
    d) reducing the tack of the elastomeric side of the sheet;
    e) unwinding the roll and stripping the liner from the sheet;
    f) slitting or cutting the sheet into two or more smaller sheets;
    g) winding a smaller sheet upon itself into a roll without the use of a liner;
    h) after a period of time unwinding the smaller roll without the elastomer substantially debonding from the cords; and
    i) circumferentially applying at least some of the smaller sheet radially outwardly of a belt reinforcing package and radially inwardly of a tread portion of a tire to form an overlay structure.

11. The method of claim 10 wherein the step of forming an overlay structure further comprises the steps of helically winding about the belt reinforcing structure a continuous smaller sheet about the belt reinforcing structure with adjacent turns of the continuous smaller sheet about the belt reinforcing structure in an overlapping relationship and wherein the cords of the smaller sheet are disposed at $0°$ to $5°$ with respect to the equatorial plane of the tire.

CALENDER

LINER
LET OFF

FIG. IA
(PRIOR ART)

WINDUP

FIG. IB
(PRIOR ART)

SLITTER

WINDUPS

LINER
(TO BE SCRAP)

TO TIRE
BUILDER

FIG. IC
(PRIOR ART)

CALENDER

FIG. 2A

WINDUP

LINER WINDUP
(TO BE REUSED)

WINDUPS

SLITTER

FIG. 2B

TO TIRE
BUILDER

FIG. 2C

FIG. 3

FIG. 4

FIG. 5

FIG. 6

FIG. 7